# NEUE EUROPÄISCHE PATENTSCHRIFT

(11) **EP 1 141 910 B2**
(45) Veröffentlichungstag und Bekanntmachung des Hinweises auf die Entscheidung über den Einspruch: **05.08.2009**
(45) Hinweis auf die Patenterteilung: 16.04.2003
(21) Anmeldenummer: 99964431.3
(22) Anmeldetag: 11.12.1999
(51) Int. Cl.: G08G 1/0968

(54) **NAVIGATIONSVERFAHREN UND NAVIGATIONSSYSTEM FÜR FORTBEWEGUNGSMITTEL**
NAVIGATION METHOD AND NAVIGATION SYSTEM FOR MEANS OF LOCOMOTION
PROCEDE ET DISPOSITIF DE NAVIGATION POUR MOYENS DE DEPLACEMENT

(30) Priorität: 21.12.1998 DE 19859080
(43) Veröffentlichungstag der Anmeldung: 10.10.2001
(73) Patentinhaber: ROBERT BOSCH GMBH, 70442 Stuttgart (DE)
(72) Erfinder: HESSING, Bernd, D-31188 Holle (DE)
(86) Internationale Anmeldenummer: PCT/DE1999/003962
(87) Internationale Veröffentlichungsnummer: WO 2000/038130

(56) Entgegenhaltungen:
- EP-A- 0 636 863
- EP-A- 0 782 119
- WO-A1-20/00/22593
- DE-C1- 19 623 666
- PATENT ABSTRACTS OF JAPAN vol. 1997, no. 11, 28. November 1997 (1997-11-28) & JP 09 178499 A (TOYOTA MOTOR CORP;FUJITSU TEN LTD; FUJITSU LTD), 11. Juli 1997 (1997-07-11)

## Beschreibung

### Technisches Gebiet

Die Erfindung betrifft ein Verfahren zur Navigation von einem Startort, insbesondere einem momentanen Standort, zu einem Zielort, wobei ein Routing-Algorithmus eines Navigationssystems für ein Fortbewegungsmittel, insbesondere ein Kraftfahrzeug, Schiff oder Flugzeug, eine Route vom Startort zum Zielort über auf einer digitalen Karte gespeicherte Knotenpunkte berechnet, gemäß dem Oberbegriff des Anspruchs 1. Die Erfindung betrifft ferner ein Navigationssystem für ein Fortbewegungsmittel, insbesondere ein Kraftfahrzeug, Schiff oder Flugzeug, mit einem Internroutenspeicher, einer mit diesem verbunden Internzielführungseinrichtung, einer internen digitalen Karte und einer Datenkommunikationseinrichtung zur Kommunikation mit einem externen Off-Board-Navigationssystem, gemäß dem Oberbegriff das Anspruchs 12.

### Stand der Technik

Navigationssysteme, beispielsweise solche in Kraftfahrzeugen, basieren auf digitalen Karten, welche in Festwertspeichern mitgeführt werden. Da sich alle Funktionselemente im Fahrzeug befinden, werden diese Navigationssysteme als autonome Navigationssysteme klassifiziert. Weiterhin sind Navigationssysteme bekannt, bei denen die Routen außerhalb eines eigentlichen Zielführungssystems berechnet werden. Beispielsweise wird die von einem Fahrzeug zu fahrende Route in einer Verkehrstelematik Zentrale berechnet. Diese sogn. Off-Board-Navigationssysteme haben den Vorteil, dass der Einsatzbereich nicht von vornherein durch Umfang und Aktualisierungsstand der mitgeführten digitalen Karte eingeschränkt wird. Andererseits kann nur durch einen zur Zeit wirtschaftlich nicht realisierbaren Kommunikationsaufwand die Geschwindigkeit, der Komfort und die Präzision eines autonomen Navigationssystems erreicht werden.

Herkömmliche Navigationssysteme haben jedoch den Nachteil, dass lediglich entweder eine vollständig autonome Routenberechnung oder eine vollständige externe bzw. Off-Board-Routenberechnung erfolgt mit den jeweils oben geschilderten Nachteilen.

Die japanische Patentschrift JP 09 178499 A beschreibt ein hybrides Navigationssystem, bei dem die Route soweit wie möglich intern berechnet wird. Erst für die Navigation im Schlußabschnitt wird auf externe Datenbanken zugegriffen, wenn keine internen Daten für den Schlußabschnitt mehr vorliegen.

### Darstellung der Erfindung, Aufgabe, Lösung, Vorteile

Es ist Aufgabe der vorliegenden Erfindung, ein verbessertes Navigationsverfahren und ein verbessertes Navigationssystem der obengenannten Art zur Verfügung zu stellen, welche die obengenannten Nachteile beseitigen.

Diese Aufgabe wird durch ein Navigationsverfahren der o.g. Art mit den in Anspruch 1 gekennzeichneten Merkmalen und durch ein Navigationssystem der o.g. Art mit den in Anspruch 12 gekennzeichneten Merkmalen gelöst.

Dazu ist es bei einem Navigationsverfahren der o.g. Art erfindungsgemäß vorgesehen, dass entweder ein Internzielführungsalgorithrus des Navigationssystems eine Zielführung auf der Basis-des intern berechneten Routenanteils oder ein Externzielführungsalgorithmus eine Zielführung auf der Basis des extern berechneten Routenanteils durchführt je nach dem ob sich das Fortbewegungsmittel innerhalb oder außerhalb des Bereiches der internen digitalen Karte (101) befindet.

Dies hat den Vorteil, dass ein hybrides Navigationssystem zur Verfügung steht, wobei, so weit möglich, bei der Zielführung die detaillierten Informationen der internen digitalen Karte Verwendung finden und lediglich in Bereichen, welche außerhalb der internen digitalen Karte liegen, eine Zielführung auf der Basis einer extern gespeicherten digitalen Karte verwendet werden. Dadurch werden erfindungsgemäß die Vorteile eines autonomen Navigationssystems, nämlich eine hohe Zielführungsgenauigkeit, mit den Vorteilen eines Off-Board-Navigationssystems, nämlich keine Bereichsbegrenzung aufgrund der digitalen Kartenbasis, vereint. Gleichzeitig werden die Nachteile eines autonomen Navigationssystems, nämlich Navigationsführung ausschließlich innerhalb der intern gespeicherten digitalen Karte, sowie die Nachteile eines Off-Board-Navigationssystems, nämlich hohe Übertragungskosten durch große zu übertragende Datenmengen, vermieden. Somit stehen einem Benutzer die Vorteile des "Off-Board"Navigationssystems und des autonomen Navigationssystems unter einer einheitlichen Bedienoberfläche mit jeweils bestmöglicher Funktion zur Verfügung.

Vorzugsweise Weitergestaltungen des Navigationsverfahrens sind in den Ansprüchen 2 bis 11 beschrieben.

In einer bevorzugten Ausführungsform wird zunächst vom externen Routing-Algorithmus die vollständige Route berechnet, an das Navigationssystem übertragen und anschließend vom internen Routing-Algorithmus derjenige Routenanteil, welcher ausschließlich in der internen digitalen Karte gespeicherte Knotenpunkte umfasst, berechnet und der entsprechende Teil der extern berechneten Route durch den intern berechneten Routenanteil ersetzt.

Zur Reduktion von Kommunikationskosten und Übertragungsszeit erzeugt zuerst der interne Routing-Algorithmus die intern berechnete Route, überträgt Informationen über noch fehlende Teile der Route, insbesondere noch fehlende Knotenpunkte und Übergabeknotenpunkte, an den externen Routing-Algorithmus, berechnet der externe Routing-Algorithmus lediglich die noch fehlenden Routenanteile und überträgt diese an das Navigationssystem.

In einer bevorzugten Ausführungsform wird der intern berechnete Routenanteil im Navigationssystem in einem Internroutenspeicher und der extern berechnete Routenanteil im Navigationssystem in einem Externroutenspeicher abgespeichert, wobei entweder ein Internzielführungsalgorithmus des Navigationssystems eine Zielführung auf der Basis der Route im Internroutenspeicher oder ein Externzielführungsalgorithmus des Navigationssystems eine Zielführung auf der Basis der Route im Externroutenspeicher durchführt.

Zweckmäßigerweise wird bei Erreichen eines Übergabeknotenpunktes vom Internzielführungsalgorithmus auf den Externzietführungsalgorithmus umgeschaltet, wenn das Fortbewegungsmittel den Bereich der internen digitalen Karte verlässt, bzw. vom Externzielführungsalgorithmus auf den Internzielführungsalgorithmus umgeschaltet, wenn das Fortbewegungsmittel den Bereich der internen digitalen Karte erreicht.

Jederzeit aktuelle Daten sowohl im Internroutenspeicher als auch im Externroutenspeicher erzielt man dadurch, dass während der Zielführung bereits erreichte Knotenpunkte bzw. passierte Abschnitte der Route sowohl im Internroutenspeicher als auch im Externroutenspeicher als erledigt bzw. passiert gekennzeichnet oder gelöscht werden, unabhängig davon, welcher Zielführungsalgorithmus gerade aktiv ist.

Für eine schnelle Zuordnung von Knotenpunkten an die interne Karte oder die Externe Karte und zum schnellen Auffinden von entsprechenden Übergabeknotenpunkten werden in einem Zieleingabespeicher des Navigationssystems sowohl in der internen digitalen Karte gespeicherte, interne Knotenpunkte als auch außerhalb des Bereichs der internen digitalen Karte befindliche externe Knotenpunkte gespeichert, wobei zu vorbestimmten externen Knotenpunkten wenigstens ein Übergabeknotenpunkt abgespeichert wird, wobei der Übergabeknotenpunkt ein in der internen digitalen Karte enthaltener interner Knotenpunkt ist.

Für eine optimale Auswahl von Übergabeknoten werden in einem gesonderten Kommunikationsschritt zwischen dem Navigationssystem und einem Off-Board-Navigationssystem, welches den externen Routing-Algorithmus ausführt und die externe digitale Karte speichert, die notwendigen Übergabeknotenpunkte mittels eines Datenprotokolls anhand von geographischen Beschreibungen von außerhalb der internen digitalen Karte liegenden Knotenpunkten bestimmt.

In einer vorteilhaften Ausführungsform überträgt nach einer Eingabe eines Zielortes, welcher außerhalb des Bereichs der internen digitalen Karte liegt, das Navigationssystem an ein Off-Board-Navigationssystem, welches den externen Routing-Algorithmus ausführt und die externe digitale Karte speichert, den eingegebenen Zielort und eine Versionsnummer der internen digitalen Karte, wobei das Off-Board-Navigationssystem aus diesen Informationen einen Übergabeknotenpunkt bestimmt, von dem aus zum eingegebenen Zielort der extern berechnete Routenanteil von dem externen Routing-Algorithmus berechnet und an das Navigationssystem übertragen wird.

Zweckmäßigerweise überträgt das Navigationssystem an ein Off-Board-Navigationssystem, welches den externen Routing-Algorithmus ausführt und die externe digitale Karte speichert, eine Liste von möglichen Übergabeknotenpunkten, wobei das Off-Board-Navigationssystem gemäß dem extern berechneten Routenanteil wenigstens einen geeigneten Übergabeknotenpunkt auswählt und mit dem extern berechneten Routenanteil an das Navigationssystem überträgt.

In einer bevorzugten Ausführungsform erfolgt die Berechnung des extern berechneten Routenanteils dann, wenn das Fortbewegungsmittel einen Bereich der internen digitalen Karte verlässt.

Bei einem Navigationssystem der o.g. Art ist es erfindungsgemäß vorgesehen, dass ein mit der Datenkommunikationseinrichtung verbundener Externroutenspeicher sowie eine mit diesem verbundene Externzielführungseinrichtung vorgesehen ist, wobei ferner eine Schalteinrichtung vorgesehen ist, welche während einer Zielführung wahlweise die Externzielführungseinrichtung oder die Internzielführungseinrichtung aktiviert, je nach dem ob sich das Fortbewegungsmittel innerhalb oder außerhalb des Bereiches der internen digitalen Karte befindet.

Dies hat den Vorteil, dass ein hybrides Navigationssystem zur Verfügung steht, wobei, so weit möglich, bei der Zielführung die detaillierten Informationen der internen digitalen Karte Verwendung finden und lediglich in Bereichen, welche außerhalb der internen digitalen Karte liegen, eine Zielführung auf der Basis einer extern gespeicherten digitalen Karte verwendet werden. Dadurch werden erfindungsgemäß die Vorteile eines autonomen Navigationssystems, nämlich eine hohe Zielführungsgenauigkeit, mit den Vorteilen eines Off-Board-Navigationssystems, nämlich keine Bereichsbegrenzung aufgrund der digitalen Kartenbasis, vereint. Gleichzeitig werden die Nachteile eines autonomen Navigationssystems, nämlich Navigationsführung ausschließlich innerhalb der intern gespeicherten digitalen Karte, sowie die Nachteile eines Off-Board-Navigationssystems, nämlich hohe Übertragungskosten durch große zu übertragende Datenmengen, vermieden. Somit stehen einem Benutzer die Vorteile des Off-Board-Navigationssystems und des autonomen Navigationssystems unter einer einheitlichen Bedienoberfläche mit jeweils bestmöglicher Funktion zur Verfügung.

Eine vorzugsweise Weitergestaltung des Navigationssystems ist in Anspruch 13 beschrieben. Hierbei sind der Intemroutenspeicher und der Extemroutenspeicher zu einem einzigen Speicher zusammengefasst.

### Kurze Beschreibung der Zeichnungen

Nachstehend wird die Erfindung anhand der beigefügten Zeichnungen näher erläutert. Diese zeigen in
- Fig. 1: ein schematisches Blockschaltbild einer bevorzugten Ausführungsform eines erfindungsgemäßen Navigationssystems,
- Fig. 2: einen Ausschnitt einer internen digitalen Karte des Navigationssystems von Fig. 1 und
- Fig. 3 bis 5: verschiedene Kommunikationsschritte bzw. Kommunikationsabläufe zwischen einem Navigationssystem und einem Off-Board-Navigationssystem.

### Bester Weg zur Ausführung der Erfindung

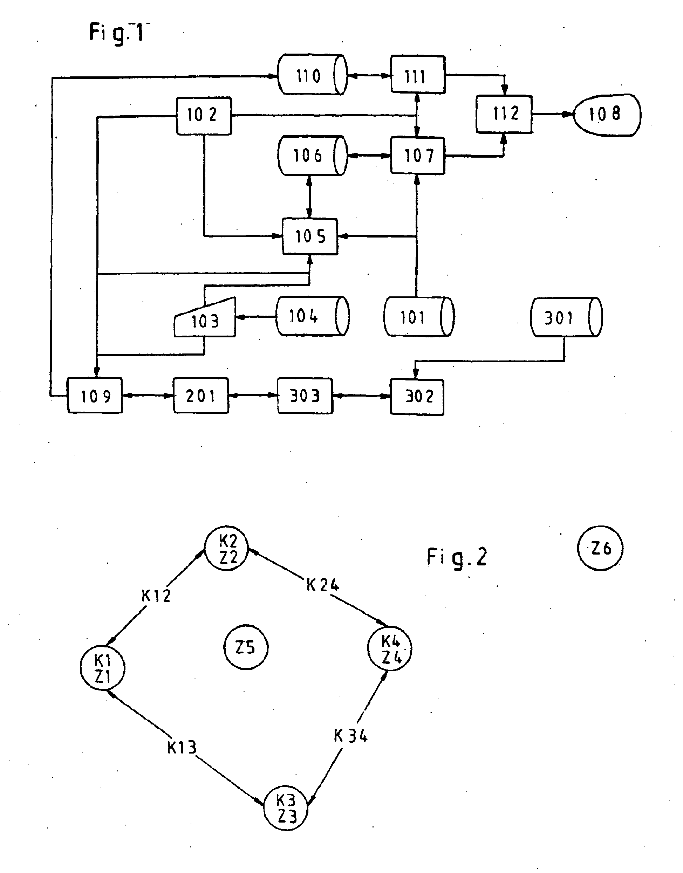

Bei dem in Fig. 1 dargestellten bevorzugten Ausführungsbeispiel eines erfindungsgemäßen Navigationssystems ist eine interne digitale Karte 101 vorgesehen. Mit Hilfe einer mit diversen Sensoren, wie beispielsweise GPS-Antenne, Tachosignal, versehenen Ortungseinrichtung 102 wird die Fahrzeugposition mit hoher Genauigkeit einem Abschnitt der digitalen Karte 101 zugeordnet, wenn sich das Fahrzeug im auf der Karte gespeicherten Netz befindet. Über eine Eingabeeinrichtung 103 kann dem Navigationssystem ein Fahrtziel vorgegeben werden. Dieses wird über einen Zieleingabespeicher 104 verifiziert und ggf. als der internen digitalen Karte 101 zugehörig identifiziert. Der Zieleingabespeicher 104 und die interne digitale Karte 101 sind zweckmäßigerweise auf dem gleichen Datenträger, wie beispielsweise einer CDROM, abgelegt. Daraufhin errechnet ein Routing-Algorithmus 105 eine intern berechnete Route bzw. Routenanteil von der Fahrzeugposition bzw. einem Startort bis zum Fahrtziel und speichert diese Route in einem Internroutenspeicher 106 ab. Der Startort muß nicht notwendigerweise mit einem momentanen Standort des Kraftfahrzeuges übereinstimmen. Beispielsweise bewegt sich das Fahrzeug während der Routenabfrage, so daß nach beendeter Routenberechnung und -übertragung das Kraftfahrzeug bereits an einer Position beabstandet vom Startort angekommen ist.

Durch einen kontinuierlich durchgeführten Vergleich der durch die Ortungseinrichtung 102 erfassten Fahrzeugposition mit der gespeicherten Route und unter Zuhilfenahme der digitalen Karte 101 werden von einem Internzielführungsalgorithmus 107 über Ausgabeeinrichtungen 108 sowohl die Fahrtroute, die Fahrzeugposition als auch Fahranweisungen zum Ziel ausgegeben. Dieser Vorgang wird kontinuierlich wiederholt, bis die Zielführung abgebrochen oder das Ziel erreicht wird. Es ist ferner eine Datenfernübertragungseinrichtung 109 vorgesehen, um Informationen über Kommunikationsnetze 201 mit einer Verkehrstelematik-Zentrale auszutauschen. Mit solcherart erhaltenen Information über Verkehrsstaus generiert der Routing-Algorithmus 105 Routen zur Umfahrung von Staus. Die Zentrale bzw. das Off-Board-Navigationssystem umfasst eine externe digitale Karte 301, einen externen Routings-Algorithmus 302 sowie eine Ein-/Ausgabefunktionen 303, etwa eine Einrichtung zur Datenfernübertragung zur Eingabe von Start und Zielposition sowie zur Ausgabe der berechneten Route. In der Zentrale werden optional durch eine Dynamisierungsfunktion Informationen über aktuelle und prognostizierte Verkehrsstörungen zur Routensuche verwendet. Eine von dem Off-Board-Navigationssystem extern berechnete Route bzw. Routenanteil wird in einen Externroutenspeicher 110 eingetragen. Die Zielführung erfolgt hierbei mit einem eigenen Externzielführungsalgorithmus 111.

Bei dem erfindungsgemäßen hybriden Navigationssystem sind die Eingabeeinrichtung 103 und der Zieleingabespeicher 104 derart erweitert, dass nicht nur Ziele auf der internen digitalen Karte 101 eingeben werden können. Bei Beginn der Zielführung kann dann zwischen den Möglichkeiten "autonome Zielführung", "Off-Board Zielführung" und "hybride Zielführung" gewählt werden. Hierzu sind sowohl der Intemroutenspeicher 106 (für autonome Routenanteile) und der Extemroutenspeicher 110 (für Off-Board Routenanteile) vorrätig zu halten. Weiterhin sind der Internzielführungsalgorithmus 107 (kartenbasierend) und der Extemzielführungsalgorithmus 111 (off-board, zum Beispiel nach GATS) doppelt auszuführen. Über eine Schaltvorrichtung 112 des hybriden Systems, welcher beispielsweise als Softwareschalter ausgebildet ist, wird während einer Fahrt an Übergabeknotenpunkten von der autonomen auf die Off-Board Zielführung und zurück geschaltet. Die Ausgabeeinrichtungen 108 und Kommunikationseinrichtung 109 können für beide Betriebsarten genutzt werden.

Zur gemeinsamen Nutzung der Ausgabeeinrichtung 108 arbeiten sowohl die autonome als auch Off-Board Navigation im "Tum by Turn"-Verfahren. Bei so einem Verfahren werden bei Annäherung an beispielsweise eine Kreuzung in den Fahranweisungen Hinweise auf die durchzuführenden Aktionen grafisch oder per Sprachausgabe erzeugt ("Demnächst rechts auf die B8 abbiegen", "Jetzt rechts auf die B8 abbiegen").

Fig. 2 zeigt beispielhaft eine interne digitale Karte 101 im Fahrzeug mit den dort enthaltenen Knoten K1 bis K4 und Kanten K12, K13, K24 und K34. Diese bilden den Bereich, in dem autonom navigiert werden kann. Weiterhin sind sechs Off-Board referenzierbare Knoten Z1 bis Z6 aufgeführt. Beispielsweise über entsprechende Software, wie Look-Up-Tabellen, werden die Knoten K1 bis K4 als jeweils identisch mit Z1 bis Z4 erkannt. Beispielsweise nach Off-Board-Berechnung einer direkte Route von Z1 nach Z2, wird diese im Fahrzeug intern als identisch mit der über Kante K12 fahrenden autonom berechenbaren Route von K1 nach K2 erkannt

Befindet sich das Navigationssystem auf einer geplanten Zielführung von K1 oder Z1 nach K2 oder Z2 so schaltet der Softwareschalter 112 an jedem beliebigen Punkt von der Internzielführungseinrichtung 107 auf die Externzielführungseinrichtung 111 und zurück. Hierzu sind beide Zielführeinrichtungen bzw. -algorithmen 107, 111 gleichzeitig aktiv, werden von der Ortungseinrichtung 102 mit Daten versorgt und während der Fahrt werden bereits passierte Abschnitte der jeweiligen Routenspeicher 106 bzw. 110 als passiert markiert oder gelöscht. Besonders vorteilhaft ist hierbei ein automatisch durchgeführter Wechsel von autonom nach Off-Board an Übergabeknotenpunkten, bei denen der Bereich der internen digitalen Karte 101 verlassen wird. Beispielsweise könnte dieses in folgendem Fall auftreten. Es wird eine Route von K1 bzw Z1 nach Z6 geplant. Eine entsprechende Route im autonomen System kann nicht geplant bzw. berechnet werden, da Z6 nicht in der internen digitalen Karte 101 enthalten ist. Off-Board würde die Route Z1 > Z2 > Z4 > Z6 berechnet. Durch Auswertung von Ähnlichkeiten wird diese Route analysiert. Da Z1 und Z4 den Kartenknoten K1 und K4 zugeordnet werden kann, wird intern ein interner Routenanteil K1 > K2 > K4 berechnet und im autonomen Routenspeicher 106 abgespeichert. Der Softwareschalter 112 wird ferner mit einer Regel derart versehen, dass beim Erhalt von Off-Board berechneten Routenanteilen diese auf der internen digitalen Karte 101 liegenden Routenanteile erkannt und hierfür autonome Routenanteile berechnet werden. Wenn dann auf einem Abschnitt der Route beide Verfahren möglich sind, so wird in vorteilhafter Weise bevorzugt das autonome Verfahren benutzt. Die Verwendung des intern berechneten Routenanteils erlaubt durch kartenbasierte Ortung präzisere Fahranweisungen. Auch ist das Verhalten zur Rückführung auf die geplante Route in diesem Fall, wegen der Kenntnis des Straßennetzes der internen digitalen Karte 101, komfortabler. Dies ist im Fall eines gewollten oder ungewollten Abweichens von der geplanten Route relevant. Wenn erkannt wird, daß keine Möglichkeit zur autonomen Zielführung mehr besteht, dann wird vom Schalter 112 auf die Off-Board Route umgeschaltet. in dem dargestellten Beispiel führt dies im erfindungsgemäßen hybriden Navigationssystem bei einer Navigationsführung von Z1 nach Z6 zu folgender durchgeführten Route: K1 > K2 > K4; Umschaltung von autonom nach Off-Board; Z4 > Z6.

Sinngemäß wird dieser Mechanismus umgekehrt auch beim Verlassen eines Off-Board Streckenanteiles angewandt. Bei der Rückfahrt von Z6 nach K1 würde am Knoten Z4 oder K4 die Möglichkeit der autonomen Routenberechnung erkannt werden. Die Route wäre dann folgendermaßen: Z6 > Z4; Umschaltung Off-Board nach autonom; K4 > K2 > K1.

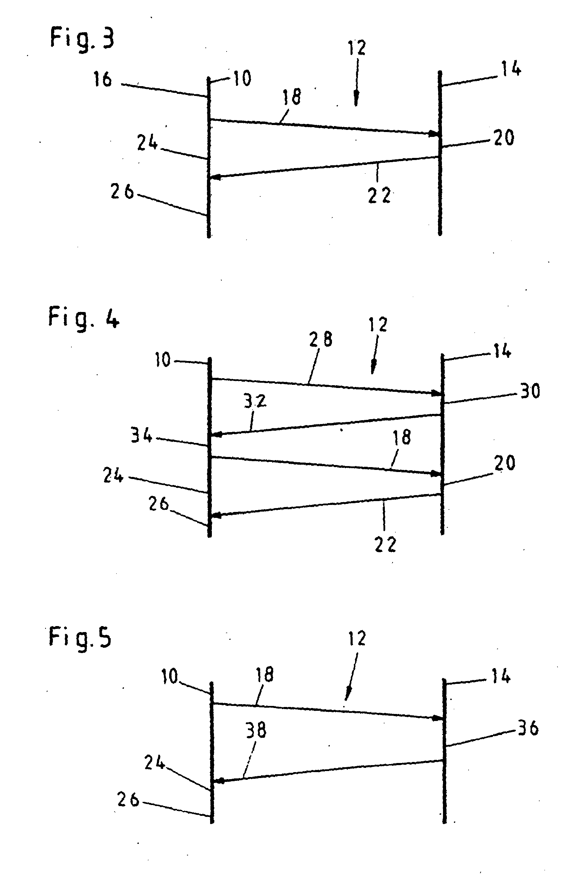

Da die Übertragung von Off-Board Routen Kommunikationskosten und Übertragungszeit erzeugt, ist es vorteilhaft, bei der Anforderung von Routen-Berechnungen die Anteile aus der Berechnung ausschließen, bei denen die Route autonom gerechnet werden kann. Hierzu wird zu jedem im Zieleingabespeicher 104 vorhandenen und nicht in der internen digitalen Karte 101 enthaltenem Ziel ein zugehöriger Netz-Übergangsknotenpunkt gespeichert. Wenn beispielsweise bei der Zieleingabe Z6 eingegeben wird, dann wird K4 als der zugehörige Übergangspunkt aufgefunden, weil dieser im Zieleingabespeicher 104 als solcher mit abgespeichert ist. Es wird dann die Route von K1 nach K4 autonom berechnet und die Route von Z4 nach Z6 für eine Off-Board Berechnung angefordert. Fig. 3 zeigt einen entsprechenden Ablauf. In den Fig. 3 bis 5 bezeichnet 10 das fahrzeugseitige Navigationssystem, 12 eine über die Datenkommunikationseinrichtung 109 übertragene Nachricht und 14 das Off-Board-Navigationssystem. Bei 16 wird der Speicherinhalt des Zieleingabespeichers 104 verwendet, um K4 als lokalen Übergabeknotenpunkt zu Z6 aufzufinden. Bei 18 wird eine Route von Z4 nach Z6 angefordert. Bei 20 wird die Route Z4 > Z6 im Off-Board-Navigationssystem 14 berechnet. Bei 22 wird die Route Z4 > Z6 vom Off-Board-Navigationssystem 14 an das Navigationssystem 10 im Fahrzeug übertragen. Bei 24 wird der interne Routenanteil K1 > K4 berechnet und bei 26 startet die Zielführung.

Alternativ werden in einem gesonderten Kommunikationsschritt die notwendigen Übergabeknotenpunkte mit Hilfe eines Datenprotokolles zwischen hybriden Navigationssystem 10 und Off-Board-Navigationssystem 14 anhand von geographischen Beschreibungen von außerhalb der digitalen Karte liegenden Knoten ausgehandelt, wie in Fig. 4 dargestellt. Beispielsweise ist dabei die Zuordnung des Übergabeknotenpunktes K4 zum Ziel Z6 nicht im Zieleingabespeicher 104 gespeichert. Satt dessen wird, wie aus Fig. 4 ersichtlich, nach Eingabe des Zieles Z6 über Datenfernübertragung 28 das Ziel bei 30 im Off-Board-Navigationssystem 14 identifiziert und die ungefähre Lage des Zieles Z6 an das Fahrzeug bei 32 zurück übermittelt und dann dort mit Hilfe eines entsprechenden Zuordnungsalgorithmus bei 34 der nächstgelegene Übergabeknotenpunkt K4 zugeordnet.

Wenn die im Navigationssystem 10 vorhandene interne digitale Karte 101 auch im für die Off-Board Berechnung verwendeten Gerät 14 vorhanden ist, dann genügt es, wie in Fig. 5 veranschaulicht, zur Identifikation des Übergabeknotenpunktes in die Routenberechnungsanfrage 18 eine Steuerinformation mit einer Identifizierungsmöglichkeit der Version der internen digitalen Karte 101 einzubringen. Diese Information wird dann Off-Board verwendet, um bei 36 die notwendigen Übergangsknotenpunkte zu identifizieren. Beispielsweise lautet die Anfrage 18 nach einer Route von Z1 nach Z6 mit digitaler Karte V1. In Kommunikationsschritt 38 wird dann vom Off-Board-Navigationssystem 14 an das interne Navigationssystem 10 die Route Z4 nach Z6 übertragen und mitgeteilt, dass bis K4 eine interne Routenberechnung zu erfolgen hat. Dies wird in 24 ausgeführt und in 26 startet wiederum die Zielführung.

Alternativ besteht die Steuerinformation auch aus einer im hybriden Navigationssystem 10 erzeugten Liste von möglichen Übergangspunkten. Das Off-Board-Navigationssystem 14 wählt dann den zu verwendenden Übergabeknotenpunkt aus. In einem ersten Kommunikationsschritt wird Z5 als Ziel an das Off-Board-Navigationssystem 14 übertragen. In einem weiteren Schritt wird die Position von Z5 festgestellt und danach an das interne Navigationssystem 10 übertragen. Im folgenden Schritt werden die Knoten K2 und K3 als mögliche Übergabeknotenpunkte identifiziert und im darauffolgen Kommunikationsschritt an das Off-Board-Navigationssystem 14 übertragen. Im nächsten Schritt wird die Route Z2 nach Z5 berechnet und danach zusammen mit dem Übergabeknotenpunkt K2 an das interne Navigationssystem 10 übertragen. Dieses stellt danach fest, dass ein interner Routenanteil von K1 nach K2 zu berechnen ist.

Die Codierung der Übergabeknotenpunkte besteht beispielsweise aus Geocodes nach GATS, TMC Locations nach prENV 12313-3 oder aus ERTICO ILOCs. In einer alternativen Ausführungsform sind die Routenspeicher 106 und 110 zu einem einzigen kombiniert. Bei autonom "fahrbaren" Anteilen stehen dort Hinweise auf die Anbindung an die eigene digitale Karte und bei "Off-Board"-Anteilen Hinweise auf Korridore entsprechend GATS Protokoll.

Die Realisierung eines erfindungsgemäßen Hybridsystems wird nachfolgend am Beispiel eines Navigationssystems mit dynamischem APS (dynAPS) beschrieben.Die Zieleingabe erfolgt dort entweder indem über eine Eingabeeinrichtung die Ziele in der Reihenfolge "Stadt", ggf. "Stadtteil", "Straßenname", "Kreuzung oder Hausnummer durch Buchstabieren und Auswahl aus Listen oder Kombinationen hieraus eingeben werden. Die möglichen Ziele werden dabei einem Zieleingabespeicher 104 auf der CD-ROM mit der internen digitalen Karte 101 entnommen. Für die folgenden beiden Beispiele wird angenommen das der Fahrzeugstandort zu Beginn Köln, das Fahrziel Paris und eine CD-ROM mit dem deutschen Straßennetz im Fahrzeug eingelegt ist.

Zur Ermöglichung der hybriden Zielführung zu ausgewählten Zielen außerhalb der internen digitalen Karte 101 ist dieser Zieleingabespeicher 104 um Zusatzinformationen erweitert, vgl. Fig. 4. Zum Eintrag Paris (Frankreich) sind im Zieleingabespeicher 104 der CD-ROM Listen von möglichen Übergangsknotenpunkten und Regeln zu deren Auswahl gespeichert. Beispielsweise wird bei einer Deutschland-CD-ROM für bei einer Fahrzeugposition "Nordrhein Westfalen" der Übergabeknotenpunkt "A44 Aachen-Lichtenbusch" gewählt. Dieses geschieht, ohne dass der Fahrer dieses erkennen kann. Nach der Eingabe des Zieles hat der Fahrer beispielsweise in den Navigationseinstellungen die Funktion "Telematik/Hybride Route" ausgewählt. Ist diese Einstellung nicht erfolgt (autonome Route) dann erfolgt nach Auswahl des Zieles und Start der Zielführung die Fehlermeldung "Zu diesem Ziel können nur mit hybrider Zielführung Fahrempfehlungen gegeben werden". Bei Einstellung mit hybrider Zielführung erfolgt eine Bildschirmausgabe "Routensuche über Verkehrstelematik läuft". Über ein GSM-Mobilfunknetz erfolgt eine Routenanfrage mit Hilfe der im dynAPS vorhandenen Möglichkeit zur SMS-Kommunikation (Short Message Service). Als Antwort erhält das Fahrzeug eine nach GATS aufgebaute Routenliste vom Grenzübergang Aachen-Lichtenbusch bis zu der innerhalb von Paris angegebenen Straße. Diese ist als Folge von auszuführenden Fahrmanövern aufgebaut. Beispielsweise sind die zur Fahrt nach Paris notwendigen Wechsel der Autobahnen im Bereich Lüttich enthalten. Während der Abfrage wird der autonom berechenbare Anteil der Route im dynAPS berechnet. Nachdem beide Anteile vorliegen, kann mit der Zielführung begonnen werden.

Im dynAPS wird jeweils die Entfernung zum nächsten Fahrmanöver in einem Bildschirm angezeigt. Bei Annäherung an den Ort des Manövers erscheint ein Piktogramm des Ortes dieses Manövers mit dem eingetragenen erwarteten Fahrweg. Dieses wäre bei Annäherung an das Autobahnkreuz Aachen auf der A4 von Köln kommend erst die Entfernung zum Autobahnkreuz Aachen und bei Annäherung ein Bild welches "Rechts herausfahren" signalisiert. Die Fahranweisung werden ebenfalls bei Annäherung gesprochen.

Die Annäherung an den Grenzübergang Aachen-Lichtenbusch würde in gleicher Art signalisiert "Demnächst geradeaus fahren". Beim Passieren der Grenze wird, vom Fahrer unbemerkt, von autonomer auf Off-Board Zielführung umgeschaltet. Die Informationen zur Zuordnung von Fahranweisung und der Fahrzeugposition zur geplanten Route erfolgen nicht mehr mit Hilfe der digitalen Karte 101 von CD-ROM sondern mit den von der GATS Zentrale erhaltenen Routeninformation. Der Fahrer erkennt nur am durch weniger präzise Ortung ungenaueren Fahranweisungen und einem anderen Verhalten bei Abweichungen von der geplanten Route, daß der Bereich der digitalen Karte verlassen wurde.Das "normale" dynAPS würde nach dem Grenzübertritt die Meldung "OFF MAP" erzeugen.

Im nächsten Beispiel soll eine Fahrt mit hybriden APS von Köln nach Steinfurt, Ortsteil Burgsteinfurt Wemhöferstiege erfolgen. Nach der Zieleingabe wird erkannt, dass das Fahrtziel in einem Ort liegt, bei dem nur das Zentrum und nicht die einzelnen Straßen in Wohngebieten digitalisiert sind. Eine Unterstützung der Zieleingabe, wie im vorherigen Beispiel durch Hinterlegung von Informationen im Zieleingabespeicher, ist hier nicht möglich. Bei der Routenanfrage über SMS übergibt das hybride APS an die GATS Zentrale neben Startposition und gewünschten Fahrtziel auch eine Kennung über die eingelegte CD-ROM (Datenumfang, Version) mit, vgl. Fig. 5. In der GATS Zentrale kann nun erkannt werden, zu welchem Übergangsknotenpunkt der internen digitalen Karte 101 geführt werden soll. Es wird hier ein Punkt zwischen der Kreuzung B54/B54n am westlichen Ortseingang von Burgsteinfurt und dem auf der B54 gelegenen als Burgsteinfurt/Zentrum auf der CD-ROM gespeicherten Punkt als Übergangsknotenpunkt gefunden. Ab der Kreuzung B54/B54n und über den Obergangspunkt wird die in Burgsteinfurt zur Wemhöferstiege zu fahrende Route in der Zentrale berechnet und an das Fahrzeug übertragen. Dort wird nun die Route bis zum Übergabepunkt autonom berechnet. Weiterhin wird die Off-Board Route im Routenspeicher 110 eingetragen. Nach Passage der Kreuzung B54/B54n wird die Umschaltung von autonomer auf hybride Zielführung vorbereitet. Das dortige Fahrmanöver erfolgt noch unter Kontrolle der autonomen Zielführung. Das nächste Fahrmanöver "Rechts abbiegen" am Übergabeknotenpunkt wird bereits der Off-Board Route entnommen. Aufgesteuert wird es jedoch noch über den Zielführungsalgorithmus 105 der autonomen Betriebsart. Erst nach dem durchgeführten Manöver am Übergabeknotenpunkt wird vollständig durch den Off-Board Zielführungsalgorithmus 111 geführt.

Das "normale" dynAPS würde nach der Passage des Übergabeknotenpunktes die Meldung "OFF ROAD" erzeugen. Auch wäre die Erzeugung einer Fahranweisung "Recht abbiegen" zum Verlassen des digitalisierten Straßennetzes nicht möglich.

Zusammenfassend betrifft die Erfindung ein Navigationssystem zur Zielführung in einem Fahrzeug wobei die für eine zur Zielführung im Navigationssystem gespeicherte Route anteilig aus im Fahrzeug mit Daten einer digitalen Karte 101 (autonom) berechneten und von einem externen Routing 302 erhaltenen (Off-Board) berechneten Routenabschnitten zusammen gesetzt ist. Die extern bestimmten Anteile müssen dabei nicht notwendigerweise in der im Fahrzeug für das Routing verwendeten digitalen Karte 101 enthalten sein. Vorteilhaft ist weiterhin eine Gestaltung derart, dass die Umschaltung zwischen den zentral oder autonom berechneten Abschnitten entweder gesteuert durch einen Nutzer oder auf Wunsch unbemerkt im Hintergrund erfolgt, wobei zur automatischen Umschaltung im Hintergrund im Routenspeicher die einzelnen Routenabschnitte mit Steuerinformationen versehen sind, welche die Umschaltung steuern.

Besonders vorteilhaft ist, dass eine einheitliche Benutzeroberfläche zur Ausgabe von Fahranweisungen und der Route benutzt wird und zwar unabhängig davon, welche Art Routenabschnitt gerade vom Fahrzeug passiert wird. Vorteilhaft ist ferner die doppelte Auslegung des Routenspeichers 106, 110 wobei ein Routenspeicher 110 die zentral extern berechnete Route und der andere Routenspeicher 106 die autonom intern berechnete Route beinhaltet und auf Grund von Steuerinformationen bei Bedarf von einem auf den anderen Routenspeicher umgeschaltet wird. Vorteilhaft ist ferner die Übertragung der extern bestimmten Anteile über eine Datenfernübertragungseinrichtung 109, beispielsweise durch Datenfunk in einem Mobilfunknetz, wie die SMS-Übertragung im GSM. Dabei kann die Übertragung sowohl einseitig ins Fahrzeug gerichtet sein (Broadcast) oder einen bidirektionalen Datenverkehr benutzen. Die extern berechneten Anteile können nach GATS Appendix 5.3.1 und 5.3.2, mit Hilfe von GATS Geocodes, mit Hilfe von TMC-Locations, mit Hilfe von ERTICO IL0Cs oder anderen Verfahren übertragen werden. Alternativ wird die extern berechnete Route auch über eine serielle leitungsgebundene oder Infrarot-Schnittstelle, eine Netzwerkschnittstelle oder durch Verwendung eines extern beschriebenen und im Navigationssystem gelesenen Datenträgers (Diskette, PCMCIA-Karte, ...) eingespeist. Vorteilhaft ist ferner die automatische Erzeugung der Steuerinformationen dergestalt, daß beim Empfang einer extern bestimmten Route die Anteile der Route, welche auf der im Fahrzeug befindlichen digitalen Karte eindeutig zuordbar sind, nach dem Empfang durch im Fahrzeug berechnete Anteile ersetzt werden.

Vorteilhaft ist die Übertragung von Informationen über die im Fahrzeug vorhandene digitale Karte 101, um diese Versionsinformation in der externen Routenberechnung zu benutzen, um nur die nicht im Fahrzeug berechenbaren Anteile der Route extern zu bestimmen und ins Fahrzeug zu übertragen während die restlichen Anteile im Fahrzeug berechnet werden. Vorteilhaft ist außerdem die Übertragung von Listen von möglichen Einund Austrittspunkten vom Fahrzeug an die Zentrale wobei für die dort berechneten Routenanteile geeigneten Ein- und Austrittspunkte in der Zentrale ausgewählt und zum jeweiligen Routenanteil an das Fahrzeug übertragen werden. Vorteilhaft ist auch die Übertragung von Eintrittspunkten und Austrittspunkten die im Fahrzeug aus geographischen oder sonstigen Angaben über Fahrzeugposition und gewünschte Fahrziele gewonnen werden, um von der externen Routenberechnung nur die Abschnitte von der Startposition bis zum ersten Eintrittspunkt, oder vom letzten Austrittspunkt bis zum Fahrtziel, oder von einem oder mehreren auf der Route liegenden Austrittspunkten zum korrespondierend dahinter liegenden Eintrittspunkt berechnen zu lassen.

In den Situationen, bei denen das Fahrzeug den Bereich der digitalisierten Karte 101 verläßt wird automatisch oder manuell eine Abfrage zur Berechnung einer externen Routenrechnung erzeugt und das Ergebnis dieser Berechnung dann zur Rückführung in das digitalisierte Straßennetz 101 oder zur Zielführung zu dem Fahrtziel benutzt. Wenn eine Zielführung mit Hilfe der digitalen Karte 101 möglich is, dann wird in vorteilhafter Weise von der Zielführung mit Hilfe einer externen Route auf die autonom berechnete Zielführung umgeschaltet. Wenn eine Zielführung mit Hilfe der digitalen Karte 101 nicht mehr möglich ist und die Fahrzeugposition auf der extern erhaltenen Route zugeordnet werden kann dann wird in vorteilhafter Weise von der autonomen Zielführung auf die externe Route umgeschaltet

## Patentansprüche

1. Verfahren zur Navigation von einem Start- oder momentanen Standort, zu einem Zielort, wobei ein Routing-Algorithmus eines Navigationssystems (100) für ein Fortbewegungsmittel eine Route vom Start- oder momentanen Standort zum Zielort über in einer digitalen Karte gespeicherte Knotenpunkte berechnet, wobei in dem Fall, dass wenigstens einer der Knotenpunkte der zu berechnenden Route nicht innerhalb einer intern im Navigationssystem gespeicherten, internen digitalen Karte (101) enthalten ist, derjenige Teil der Route, der ausschließlich Knotenpunkte der internen digitalen Karte umfasst, von einem internen Routing-Algorithmus (105) auf der Basis der internen digitalen Karte als intern berechneter Routenanteil (106), und derjenige Teil der Route, der nicht in der internen digitalen Karte gespeicherte Knotenpunkte umfasst, von einem externen Routing-Algorithmus (302) auf der Basis einer bezüglich des Navigationssystems extern gespeicherten digitalen Karte (301) als extern berechneter Routenanteil (110) berechnet wird, wobei Übergangsknotenpunkte zwischen extern und intern berechneter Route bestimmt werden,
**dadurch gekennzeichnet,**
**dass** entweder ein Internzielführungsalgorithmus (107) des Navigationssystems eine Zielführung auf der Basis des intern berechneten Routenanteils (106) oder ein Externzielführungsalgorithmus (111) eine Zielführung auf der Basis des extern berechneten Routenanteils (110) durchführt, je nach dem ob sich das Fortbewegungsmittel innerhalb oder außerhalb des Bereiches der internen digitalen Karte (101) befindet.

2. Verfahren nach Anspruch 1, **dadurch gekennzeichnet, dass** zunächst vom externen Routing-Algorithmus die vollständige Route berechnet, an das Navigationssystem übertragen und anschließend vom internen Routing-Algorithmus derjenige Routenanteil, welcher ausschließlich in der internen digitalen Karte gespeicherte Knotenpunkte umfasst, berechnet und der entsprechende Teil der extern berechneten Route durch den intern berechneten Routenanteil ersetzt wird.

3. Verfahren nach Anspruch 1, **dadurch gekennzeichnet, dass** zuerst der interne Routing-Algorithmus die intern berechnete Route erzeugt, Informationen über noch fehlende Teile der Route, insbesondere noch fehlende Knotenpunkte und Übergabeknotenpunkte, an den externen Routing-Algorithmus überträgt, der externe Routing-Algorithmus lediglich die noch fehlenden Routenanteile berechnet und diese an das Navigationssystem überträgt.

4. Verfahren nach einem der Ansprüche 1 bis 3, **dadurch gekennzeichnet, dass** der intern berechnete Routenanteil im Navigationssystem in einem Internroutenspeicher und der extern berechnete Routenabschnitt in einem Externroutenspeicher abgespeichert wird.

5. Verfahren nach Anspruch 4, **dadurch gekennzeichnet, dass** bei Erreichen eines Übergabeknotenpunkts vom Internzielführungsalgorithmus auf den Externzielführungsalgorithmus umgeschaltet wird, wenn das Fortbewegungsmittel den Bereich der internen digitalen Karte verlässt und vom Externzielführungsalgorithmus auf den Internzielführungsalgorithmus umgeschaltet wird, wenn das Fortbewegungsmittel den Bereich der internen digitalen Karte erreicht.

6. Verfahren nach einem der Ansprüche 1 bis 4, **dadurch gekennzeichnet, dass** während der Zielführung bereits erreichte Knotenpunkte bzw. passierte Abschnitte der Route sowohl im Internroutenspeicher als auch im Externroutenspeicher als erledigt bzw. passiert **gekennzeichnet** oder gelöscht werden, unabhängig davon, welcher Zielführungsalgorithmus gerade aktiv ist.

7. Verfahren nach einem der vorhergehenden Ansprüche, **dadurch gekennzeichnet, dass** in einem Zieleingabespeicher des Navigationssystems sowohl in der internen digitalen Karte gespeicherte interne Knotenpunkte als auch außerhalb des Bereichs der internen digitalen Karte befindliche externe Knotenpunkte gespeichert werden, wobei zu vorbestimmten externen Knotenpunkten wenigstens ein Übergabeknotenpunkt abgespeichert wird, wobei der Übergabeknotenpunkt ein in der internen digitalen Karte enthaltener interner Knotenpunkt ist.

8. Verfahren nach einem der vorhergehenden Ansprüche, **dadurch gekennzeichnet, dass** in einem gesonderten Kommunikationsschritt zwischen dem Navigationssystem und einem Off-Board-Navigationssystem, welches den externen Routing-Atgorithmus ausführt und die externe digitale Karte speichert, die notwendigen Übergabeknotenpunkte mittels eines Datenprotokolls anhand von geographischen Beschreibungen von außerhalb der internen digitalen Karte liegenden Knotenpunkten bestimmt werden.

9. Verfahren nach einem der vorhergehenden Ansprüche, **dadurch gekennzeichnet, dass** nach einer Eingabe eines Zielortes, welcher außerhalb des Bereichs der internen digitalen Karte liegt, das Navigationssystem an ein Off-Board-Navigationssystem, welches den externen Routing-Algorithmus ausführt und die externe digitale Karte speichert, den eingegebenen Zielort und eine Versionsnummer der internen digitalen Karte überträgt, wobei das Off-Board-Navigationssystem aus diesen Informationen einen Übergabeknotenpunkt bestimmt, von dem aus zum eingegebenen Zielort der extern berechnete Routenanteil von dem externen Routing-Algorithmus berechnet und an das Navigationssystem übertragen wird.

10. Verfahren nach einem der vorhergehenden Ansprüche, **dadurch gekennzeichnet, dass** das Navigationssystem an ein Off-Board-Navigationssystem, welches den externen Routing-Algorithmus ausführt und die externe digitale Karte speichert, eine Liste von möglichen Übergabeknotenpunkten überträgt, wobei das Off-Board-Navigationssystem gemäß dem extern berechneten Routenanteil wenigstens einen geeigneten Übergabeknotenpunkt auswählt und mit dem extern berechneten Routenanteil an das Navigationssystem überträgt.

11. Verfahren nach einem der vorhergehenden Ansprüche, **dadurch gekennzeichnet, dass** die Berechnung des extern berechneten Routenanteils dann erfolgt, wenn das Fortbewegungsmittel einen Bereich der internen digitalen Karte verlässt.

12. Navigatiönssystem (100) für ein Fortbewegungsmittel, insbesondere ein Kraftfahrzeug, Schiff oder Flugzeug, mit einem Internroutenspeicher (106), einer mit diesem verbunden Internzielführungseinrichtung (107), einer internen digitalen Karte (101) und einer Datenkommunikationseinrichtung. (109) zur Kommunikation mit einem externen Off-Board-Navigationssystem (301 bis 303),
**dadurch gekennzeichnet, dass**
ein mit der Datenkommunikationseinrichtung verbundener Externroutenspeicher (110) sowie eine mit diesem verbundene Externzielführungseinrichtung (11) vorgesehen ist, wobei ferner eine Schalteinrichtung (112) vorgesehen ist, welche während einer Zielführung wahlweise die Externzielführungseinrichtung (111) oder die Internzielführungseinrichtung (107) aktiviert, je nach dem ob sich das Fortbewegungsmittel innerhalb oder außerhalb des Bereiches der internen digitalen Karte (101) befindet.

13. Navigationssystem (100) nach Anspruch 12, **dadurch gekennzeichnet, dass** der Internroutenspeicher (106) und der Externroutenspeicher (110) zu einem einzigen Speicher zusammengefasst sind.

## Claims

1. Method for navigation from a starting or current location to a destination, wherein a routing algorithm in a navigation system (100) for a means of transportation calculates a route from the starting or current location to the destination via nodes stored in a digital map, wherein if at least one of the nodes on the route to be calculated is not contained within an internal digital map (101) stored internally in the navigation system then that portion of the route which comprises exclusively nodes on the internal digital map is calculated by an internal routing algorithm (105) on the basis of the internal digital map as an internally calculated route component (106), and that portion of the route which does not comprise nodes stored in the internal digital map is calculated by an external routing algorithm (302) on the basis of a digital map (301) stored externally with respect to the navigation system as an externally calculated route component (110), with gateway nodes being determined between externally and internally calculated routes,
**characterized in that**
either an internal routing algorithm (107) in the navigation system performs routing on the basis of the internally calculated route component (106) or an external routing algorithm (111) performs routing on the basis of the externally calculated route component (110), depending on whether the means of transportation is located inside or outside the region of the internal digital map (101).

2. Method according to Claim 1, **characterized in that** first of all the external routing algorithm calculates the complete route, transmits it to the navigation system, and then the internal routing algorithm calculates that route component which comprises exclusively nodes stored in the internal digital map and replaces the relevant portion of the externally calculated route with the internally calculated route component.

3. Method according to Claim 1, **characterised in that** first of all the internal routing algorithm produces the internally calculated route, transmits information about portions of the route which are still missing, particularly nodes and interface nodes which are still missing, to the external routing algorithm, the external routing algorithm calculates just the route components which are still missing and transmits them to the navigation system.

4. Method according to Claims 1 to 3, **characterized in that** the internally calculated route component is stored in the navigation system in an internal route memory and the externally calculated route section is stored in an external route memory.

5. Method according to Claim 4, **characterized in that** when an interface node is reached the system is switched from the internal routing algorithm to the external routing algorithm when the means of transportation leaves the region of the internal digital map, and the system is switched from the external routing algorithm to the internal routing algorithm when the means of transportation reaches the region of the internal digital map.

6. Method according to one of Claims 1 to 4, **characterized in that**, during routing, nodes already reached and sections of the route which have been passed are flagged as done or passed both in the internal route memory and in the external route memory or are erased, regardless of which routing algorithm is currently active.

7. Method according to one of the preceding claims, **characterized in that** a destination input memory in the navigation system is used to store both internal nodes stored in the internal digital map and external nodes located outside the region of the internal digital map, with at least one interface node being stored for predetermined external nodes, the interface node being an internal node contained in the internal digital map.

8. Method according to one of the preceding claims, **characterized in that** a separate communication step between the navigation system and an offboard navigation system, which executes the external routing algorithm and stores the external digital map, is used to determine the necessary interface nodes using a data protocol on the basis of geographical descriptions of nodes located outside the internal digital map.

9. Method according to one of the preceding claims, **characterized in that** following input of a destination which is located outside the region of the internal digital map, the navigation system transmits the input destination and a version number for the internal digital map to an offboard navigation system which executes the external routing algorithm and stores the external digital map, the offboard navigation system using this information to determine an interface node from which the external routing algorithm calculates the externally calculated route component to the input destination and transmits it to the navigation system.

10. Method according to one of the preceding claims, **characterized in that** the navigation system transmits a list of possible interface nodes to an offboard navigation system which executes the external routing algorithm and stores the external digital map, the offboard navigation system taking the externally calculated route component as a basis for selecting at least one suitable interface node and transmitting it to the navigation system with the externally calculated route component.

11. Method according to one of the preceding claims, **characterized in that** the externally calculated route component is calculated when the means of transportation leaves a region of the internal digital map.

12. Navigation system (100) for a means of transportation, particularly a motor vehicle, ship or aeroplane, having an internal route memory (106), an internal routing device (107) connected thereto, an internal digital map (101) and a data communication device (109) for communication with an external offboard navigation system (301 to 303),
**characterized in that**
an external route memory (110) connected to the data communication device and an external routing device (111) connected to said external route memory are provided, with a switching device (112) also being provided which, during routing, activates either the external routing device (111) or the internal routing device (107), depending on whether the means of transportation is located inside or outside the region of the internal digital map (101).

13. Navigation system (100) according to Claim 12, **characterized in that** the internal route memory (106) and the external route memory (110) are combined to form a single memory.

## Revendications

1. Procédé de navigation d'un lieu de départ ou momentané vers un lieu de destination, un algorithme de calcul d'itinéraire d'un système de navigation (100) pour un moyen de déplacement calculant un itinéraire entre le lieu de départ ou momentané vers le lieu de destination par le biais de points nodaux enregistrés dans une carte numérique, avec lequel, dans le cas où au moins l'un des points nodaux de l'itinéraire à calculer n'est pas inclus dans une carte numérique (101) interne mémorisée à l'intérieur du système de navigation, la partie correspondante de l'itinéraire qui comprend exclusivement des points nodaux de la carte numérique interne est alors calculée sous la forme d'une partie d'itinéraire calculée en interne (106) par un algorithme de calcul d'itinéraire interne (105) en se basant sur la carte numérique interne et la partie correspondante de l'itinéraire qui ne comprend pas de points nodaux de la carte numérique interne est calculée sous la forme d'une partie d'itinéraire calculée en externe (110) par un algorithme de calcul d'itinéraire externe (302) en se basant sur une carte numérique enregistrée en externe (301) par rapport au système de navigation, les points nodaux de transition entre les itinéraires calculés en interne et en externe étant déterminés,
**caractérisé en ce que**
soit un algorithme interne de guidage vers la destination (107) du système de navigation effectue un guidage vers la destination en se basant sur la partie d'itinéraire calculée en interne (106), soit un algorithme externe de guidage vers la destination (111) effectue un guidage vers la destination en se basant sur la partie d'itinéraire calculée en externe (110), suivant que le moyen de déplacement se trouve à l'intérieur ou à l'extérieur de la zone de la carte numérique interne (101).

2. Procédé selon la revendication 1, **caractérisé en ce que** l'itinéraire complet est tout d'abord calculé par l'algorithme de calcul d'itinéraire externe, transmis au système de navigation, puis la partie de l'itinéraire qui comprend exclusivement des points nodaux mémorisés sur la carte numérique interne est ensuite calculée par l'algorithme de calcul d'itinéraire interne et la partie correspondante de l'itinéraire calculé en externe est remplacée par la partie d'itinéraire calculée en interne.

3. Procédé selon la revendication 1, **caractérisé en ce que** l'algorithme de calcul d'itinéraire interne génère tout d'abord l'itinéraire calculé en interne, transmet des informations sur les parties encore manquantes de l'itinéraire, notamment les points nodaux encore manquants et les points nodaux de transitions, à l'algorithme de calcul d'itinéraire externe, l'algorithme de calcul d'itinéraire externe calcule uniquement les parties d'itinéraire encore manquantes et les transmet au système de navigation.

4. Procédé selon l'une des revendications 1 à 3, **caractérisé en ce que** la partie d'itinéraire calculée en interne est enregistrée dans le système de navigation dans une mémoire d'itinéraire interne et la partie d'itinéraire calculée en externe est enregistrée dans une mémoire d'itinéraire externe.

5. Procédé selon la revendication 4, **caractérisé en ce que** lorsqu'un point nodal de transition est atteint, une permutation est effectuée de l'algorithme interne de guidage vers la destination sur l'algorithme externe de guidage vers la destination lorsque le moyen de déplacement quitte la zone de la carte numérique interne et une permutation est effectuée de l'algorithme externe de guidage vers la destination sur l'algorithme interne de guidage vers la destination lorsque le moyen de déplacement atteint la zone de la carte numérique interne.

6. Procédé selon l'une des revendications 1 à 4, **caractérisé en ce que** pendant le guidage vers la destination, les points nodaux déjà atteints ou les sections franchies de l'itinéraire sont marquées comme accomplies ou franchies ou encore effacées à la fois dans la mémoire d'itinéraire interne et dans la mémoire d'itinéraire externe, et ce indépendamment de l'algorithme de guidage vers l'itinéraire qui est momentanément actif.

7. Procédé selon l'une des revendications précédentes, **caractérisé en ce que** dans une mémoire de saisie de destination du système de navigation sont enregistrés à la fois les points nodaux internes enregistrés dans la carte numérique interne et les points nodaux externes qui se trouvent en dehors de la zone de la carte numérique interne, au moins un point nodal de transition étant enregistré pour prédéfinir les points nodaux externes, le point nodal de transition étant un point nodal interne contenu dans la carte numérique interne.

8. Procédé selon l'une des revendications précédentes, **caractérisé en ce que** les points nodaux de transition nécessaires sont déterminés au moyen d'un relevé de données à l'aide de descriptions géographiques des points nodaux qui se trouvent à l'extérieur de la carte numérique interne dans une étape de communication particulière entre le système de navigation et un système de navigation hors véhicule, lequel exécute l'algorithme de calcul d'itinéraire externe et mémorise la carte numérique externe.

9. Procédé selon l'une des revendications précédentes, **caractérisé en ce qu'**après avoir saisi un lieu de destination qui se trouve en dehors de la zone de la carte numérique interne, le système de navigation transmet à un système de navigation hors véhicule, lequel exécute l'algorithme de calcul d'itinéraire externe et mémorise la carte numérique externe, le lieu de destination saisi ainsi qu'un numéro de version de la carte numérique interne, le système de navigation hors véhicule déterminant à partir de ces informations un point nodal de transition à partir duquel la partie d'itinéraire externe vers le lieu de destination saisi est calculée par l'algorithme de calcul d'itinéraire externe puis transmise au système de navigation.

10. Procédé selon l'une des revendications précédentes, **caractérisé en ce que** le système de navigation transmet à un système de navigation hors véhicule, lequel exécute l'algorithme de calcul d'itinéraire externe et mémorise la carte numérique externe, une liste des points nodaux de transition possibles, le système de navigation hors véhicule sélectionnant au moins un point nodal de transition approprié conformément à la partie d'itinéraire calculée en externe et le transmet au système de navigation conjointement avec la partie d'itinéraire calculée en externe.

11. Procédé selon l'une des revendications précédentes, **caractérisé en ce que** le calcul de la partie d'itinéraire calculée en externe est réalisé lorsque le moyen de déplacement quitte une zone de la carte numérique interne.

12. Système de navigation (100) pour un moyen de déplacement, notamment un véhicule automobile, un navire ou un aéronef, comprenant une mémoire d'itinéraire interne (106), un dispositif interne de guidage vers la destination (107) relié à celle-ci, une carte numérique interne (101) et un dispositif de communication de données (109) pour communiquer avec un système de navigation externe hors véhicule (301 à 303),
**caractérisé en ce**
**qu'**il est prévu une mémoire d'itinéraire externe (110) reliée avec le dispositif de communication de données ainsi qu'un dispositif externe de guidage vers la destination (111) relié avec celui-ci, un dispositif de commutation (112) étant également prévu qui, pendant un guidage vers la destination, active au choix le dispositif externe de guidage vers la destination (111) ou le dispositif interne de guidage vers la destination (107) suivant que le moyen de déplacement se trouve à l'intérieur ou à l'extérieur de la zone de la carte numérique interne (101).

13. Système de navigation (100) selon la revendication 12, **caractérisé en ce que** la mémoire d'itinéraire interne (106) et la mémoire d'itinéraire externe (110) sont regroupées en une seule mémoire.
